**Europäisches Patentamt**

**European Patent Office**

**Office européen des brevets**

(19)

(11) Veröffentlichungsnummer: **0 053 725**
**A2**

(12) # EUROPÄISCHE PATENTANMELDUNG

(21) Anmeldenummer: **81109390.5**

(22) Anmeldetag: **30.10.81**

(51) Int. Cl.³: **B 60 B 11/06**
**F 16 D 65/12**

(30) Priorität: **10.12.80 DE 3046557**

(43) Veröffentlichungstag der Anmeldung:
**16.06.82 Patentblatt 82/24**

(84) Benannte Vertragsstaaten:
**AT CH DE FR IT LI**

(71) Anmelder: **Knorr-Bremse GmbH**
**Moosacher Strasse 80**
**D-8000 München 40(DE)**

(72) Erfinder: **Heise, Christian**
**Köhlerwaldstrasse 51**
**D-5802 Wetter 2(DE)**

(54) **Strassenfahrzeugrad.**

(57) Das Straßenfahrzeugrad mit abnehmbarer Felge ist insbesondere für Nutzfahrzeuge vorgesehen und weist einen aus Gußmaterial bestehenden Radsternkörper 4 mit von einem Nabenabschnitt 1 ausgehenden, radialen Rippen 7 auf. Die Radialrippen 7 erstrecken sich zwischen dem Nabenabschnitt 1 und einer Verstärkungsrippe 6, welche vom mittleren Bereich eines ringförmigen Scheibenabschnittes 5 einseitig auskragt. Das freie Ende der Verstärkungsrippe 6 befindet sich annähernd in einer Radialebene mit dem Ende 2 des Nabenabschnittes 1. Der Scheibenabschnitt 5 ist in seinen vom Nabenabschnitt 1, der umlaufenden Verstärkungsrippe 6 und den Radialrippen 7 umschlossenen Feldabschnitten 9 radial nahe dem Nabenabschnitt 1 von achsparallelen Bohrungen 10 für Befestigungsschrauben 19 durchbrochen. Die Befestigungsschrauben 19 dienen der Halterung eines im wesentlichen zylindrischen Befestigungsabschnittes 16 einer Bremsscheibe 17. Der Scheibenabschnitt 5 weist auf der der umlaufenden Verstärkungsrippe 6 abgewandten Seite, auf welcher die Bremsscheibe 17 angeordnet ist, eine radiale und eine zylindrische Zentrierfläche 11 und 12 zur Zentrierung des Befestigungsabschnittes 16 der Bremsscheibe 17 auf. Der Reibungsabschnitt 18 der Bremsscheibe 17 erstreckt sich vom Befestigungsabschnitt 16 radial nach außen. Radial außerhalb der umlaufenden Verstärkungsrippe 6 ist der Scheibenabschnitt 5 mit Speichenköpfen 13 zur Halterung einer Felge 15 versehen.

./...

Fig.1

Knorr-Bremse GmbH          München, 3.12.1980
Moosacher Str. 80          TP - fe
8000 München 40            - 1639 -

Straßenfahrzeugrad

Die Erfindung bezieht sich auf ein Straßenfahrzeugrad mit abnehmbarer Felge, insbesondere für Nutzfahrzeuge, mit den im Gattungsbegriff des Patentanspruches 1 angegebenen Merkmalen.

Mit dem DE-GM 1 996 385 ist ein Rad der vorstehend genannten Art bekanntgeworden, bei welchem der Radsternkörper zur Bildung radialer Speichen zwischen einem Nabenabschnitt und an das radial äußere Ende der Speichen angesetzter Speichenköpfe einen in axialer Richtung stark gewellten Ringkörper aufweist. Die sich radial mit etwa konstantem Querschnitt erstreckenden Speichen setzen dicht nebeneinander am Nabenabschnitt an und erst radial weit außen, nahe der Speichenköpfe, sind sie derart weit voneinander entfernt, daß in die Speichen verbindende Wandabschnitte des Ringkörpers Bohrungen zur Aufnahme von Befestigungsschrauben für eine Bremstrommel eingebracht werden können. Diese bekannte Radkonstruktion ist daher gut zur Kombination mit einer Trommelbremse, nicht aber mit einer Scheibenbremse geeignet: Bei letzter soll zum Erzielen einer hohen Bremswirkung und langer Standzeiten ein möglichst großer Reibradius vorgesehen sein, was bedingt, daß der Reibringabschnitt der Bremsscheibe bis nahe zum Innenumfang der Radfelge reicht, in diesem Abschnitt somit kein den Reibradius mindernder Raum für die zum Austausch verschlissener oder sonstwie beschädigter Bremsscheiben lösbare Befestigung der Bremsscheibe am Radsternkörper vorgesehen werden sollte, und nahe dem Nabenabschnitt kein Raum zwischen den Speichen zum Anordnen der Befestigungsmittel vorhanden ist.

Mit der DE-OS 1 803 076 ist ein mit einer Doppelbremsscheibe ausgerüstetes Rad bekanntgeworden, bei welchem offensichtlich zum Vermeiden der schwierig unterzubringenden, lösbaren Befestigungsmittel der eine Bremsscheibenteil an den Nabenabschnitt bzw. den Radsternkörper angegossen ist, bei Beschädigung und Verschleiß daher nicht auswechselbar ist und somit ein Austauschen des ganzen Radsternes mit Nabenabschnitt erfordert. Der zweite Bremsscheibenteil ist hierbei mittels einer zwischen die Reibringflächen und die Radfelge eingreifenden Verschraubung am ersten Bremsscheibenteil gehalten, wodurch der nutzbare Durchmesser der Reibungsflächen in ungünstiger Weise unnötig verkleinert wird.

Für aus Blech gepreßte Scheibenräder ist es bekannt, die Bremsscheibe mit einem zylindrischen Befestigungsabschnitt zu versehen, der mit seiner einen Stirnseite an der Radscheibe nahe deren Nabenabschnitts anzuschrauben ist und der andererseits einen radial nach außen ragenden Reibringabschnitt trägt.

Es ist Aufgabe der Erfindung, ein Straßenfahrzeugrad der eingangs genannten Art so auszubilden, daß es zum Vermeiden der Mängel der bekannten, derartigen Räder bei für hohe Belastungen ausreichender Stärke und Steifigkeit eine radial möglichst weit innen, also nahe des Nabenabschnittes liegende, lösbare Befestigung von Bremsscheiben ermöglicht. Eine weitere

3

Aufgabe der Erfindung ist darin zu sehen, das Straßenfahrzeugrad derart zu gestalten, daß es in Verbindung mit Bremsscheiben der für Scheibenräder bekannten Bauart verwendbar ist, also keine gesonderte Bremsscheibenkonstruktion erfordert, und somit ein Verringern der Typenvielfalt der zu fertigenden und auf Lager zu haltenden Bremsscheiben ermöglicht.

Diese Aufgaben werden durch eine Ausbildung des Straßenfahrzeugrades gemäß den im kennzeichnenden Teil des Patentanspruches genannten Merkmalen gelöst.

Aus den Unteransprüchen ist eine zweckmäßige weitere Ausgestaltung des Fahrzeugrades entnehmbar.

In den Zeichnungen sind Ausführungsbeispiele für nach der Erfindung ausgestaltete Fahrzeugräder dargestellt, und zwar zeigt

Fig. 1    ein Schnittbild und

Fig. 2    eine Ansicht eines Hinterrades sowie

Fig. 3    ein Schnittbild und

Fig. 4    eine Ansicht eines Vorderrades.

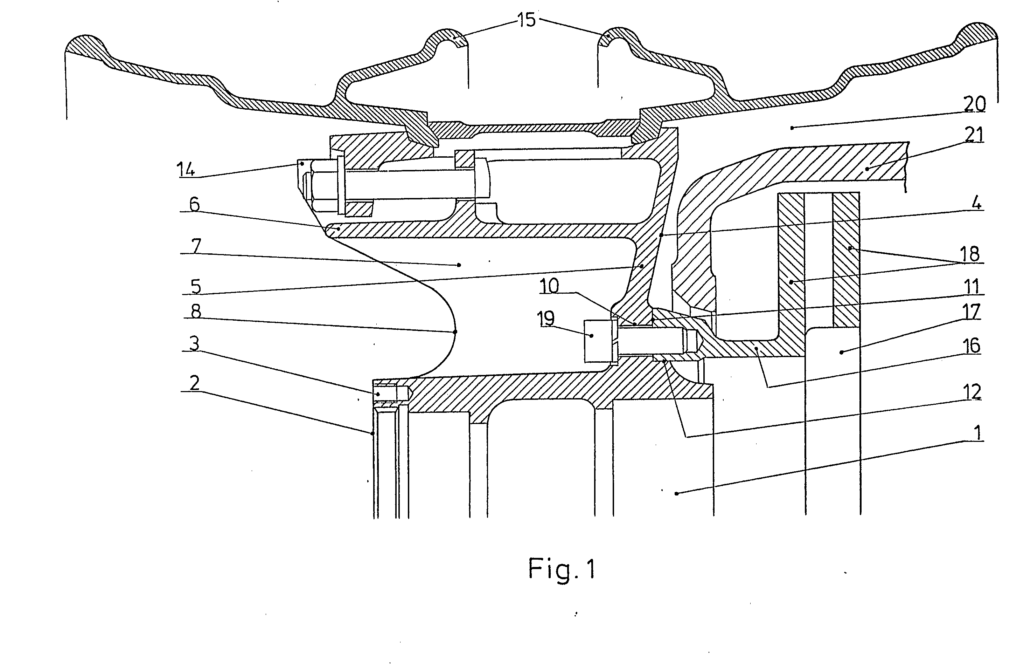

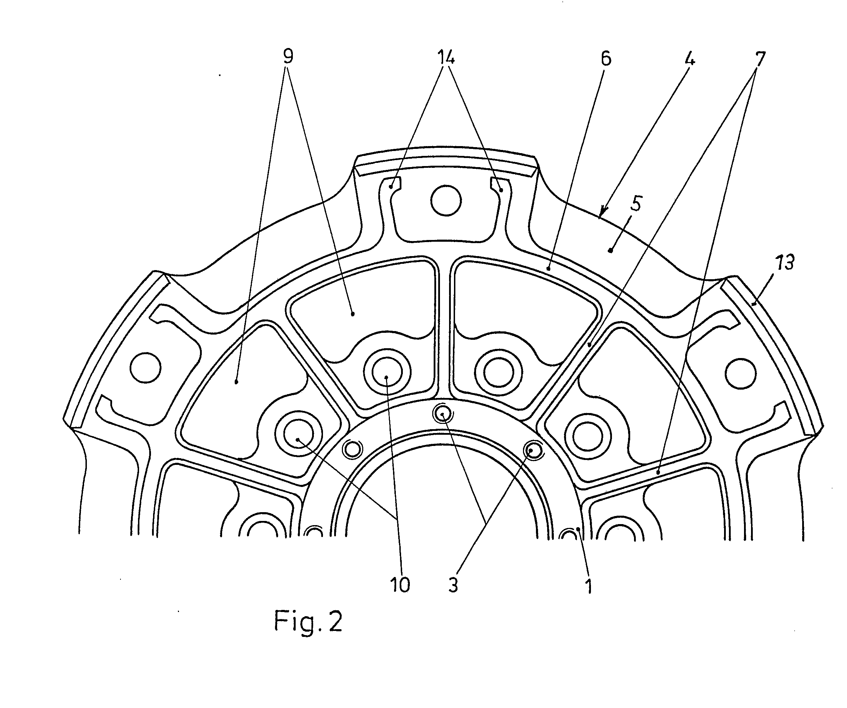

Nach Fig. 1 und 2 weist das aus Gußmaterial bestehende Hinterrad einen im wesentlichen zylindrischen Nabenabschnitt 1 auf, dessen Innenumfang zur Aufnahme der nicht dargestellten Radlager profiliert ist. An der fahrzeugäußeren Stirnseite 2 ist der Nabenabschnitt 1 mit gleichmäßig verteilt angeordneten, achsparallelen Gewindebohrungen 3 versehen, welche der Verschraubung mit einem nicht dargestellten Mitnehmerflansch zur Antriebskoppelung des Hinterrades mit der Achswelle dienen.

Nahe des fahrzeuginnenseitigen Endes ist zur Bildung des Radsternkörpers 4 an den Nabenabschnitt 1 ein diesen ringförmig umgebender Scheibenabschnitt 5 angegossen, der sich leicht zur Fahrzeuginnenseite geneigt nach radial außen erstreckt. Etwa im radial mittleren Bereich ist an den Scheibenabschnitt 5 einseitig eine axial vorspringende, umlaufende Verstärkungsrippe 6 angegossen, welche axial den Nabenabschnitt 1 geringfügig überragt, derart, daß sich ihr freies Ende annähernd - nur geringfügig nach außen versetzt - in einer Radialebene mit der Stirnseite 2 des Nabenabschnittes 1 befindet. Um den Umfang des Nabenabschnittes 1 gleichmäßig verteilt sind sich von diesem zur Verstärkungsrippe 6 erstreckende, axial ausgerichtete Radialrippen 7 eingegossen, deren eine Stirnseiten am Scheibenabschnitt 5 ansetzen und deren andere Stirnseiten 8 in ihrem radial mittleren Bereich konkav zum Scheibenabschnitt 5 hin eingezogen ausgeformt sind. Am Scheibenabschnitt 5 werden somit vom Nabenabschnitt 1, den Radialrippen 7 und der Verstärkungsrippe 6 umschlossene Feldabschnitte 9 abgegrenzt, welche von der Fahrzeugaußenseite her frei zugänglich sind. In den Feldabschnitten 9 ist nahe des Nabenabschnittes 1 der Scheibenabschnitt 5 von je einer achsparallelen Bohrung 10 durchsetzt. Auf der den Rippen 6 und 7 abgewandten Seite ist der Radsternkörper 4 nahe der Ansatzstelle des Scheibenabschnittes 5 am Nabenabschnitt 1 mit einer radialen und einer zylindrischen Zentrierfläche 11 bzw. 12 versehen.

Radial außerhalb der Verstärkungsrippe 6 ist das Fahrzeugrad in üblicher Weise radsternartig ausgebildet: Der Scheibenabschnitt 5 ist an seinem äußeren Rand mit üblichen Speichenköpfen 13 versehen, die durch an der Verstärkungsrippe 6 ansetzende Rippen 14 verstärkt sind und welche der Halterung zweier in Fig. 2 weggelassener Felgen 15 dienen.

An den Zentrierflächen 11 und 12 liegt mit entsprechenden Gegenflächen ein Ende eines zylindrischen Befestigungsabschnittes 16 einer Bremsscheibe 17 an; andererseits trägt der Befestigungsabschnitt 16 einen sich radial nach außen erstreckenden Reibungsabschnitt 18. Der Befestigungsabschnitt 16 ist am Scheibenabschnitt durch achsparallele, in Fig. 1 gezeigte Schrauben 19 befestigt. Der Reibringabschnitt 18 erstreckt sich radial bis dicht vor die Innenfläche der Felge 15; durch den relativ engen Ringspalt 20 zwischen beiden greift ein nur angedeuteter Bremssattel 21 der im übrigen nicht dargestellten Scheibenbremse, die vorzugsweise als Schwenksattelscheibenbremse auszubilden ist.

Es ist ersichtlich, daß infolge der radial weit innen liegenden Befestigung der Bremsscheibe 17 am Radsternkörper 4 ein großer, durch die Befestigungsmittel - Befestigungsabschnitt 16 mit Schrauben 19 - nicht verringerter Reibdurchmesser für die Scheibenbremse erreichbar ist, wobei die Bremsscheibe 17 jedoch lös- und austauschbar mit dem Fahrzeugrad verbunden ist; zudem weist die Bremsscheibe 17 eine auch für aus Blech gepreßte Scheibenräder geeignete Form auf, so daß für beide Fahrzeugradtypen - Blechpreßräder und gegossene Räder mit Radsternkörper - die gleichen Bremsscheiben 17 verwendbar sind.

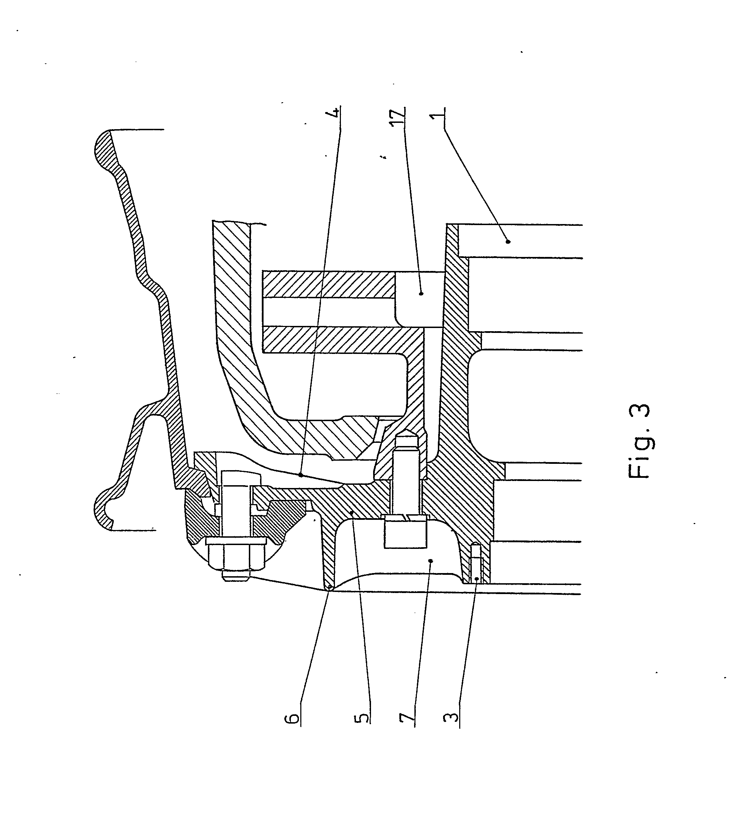

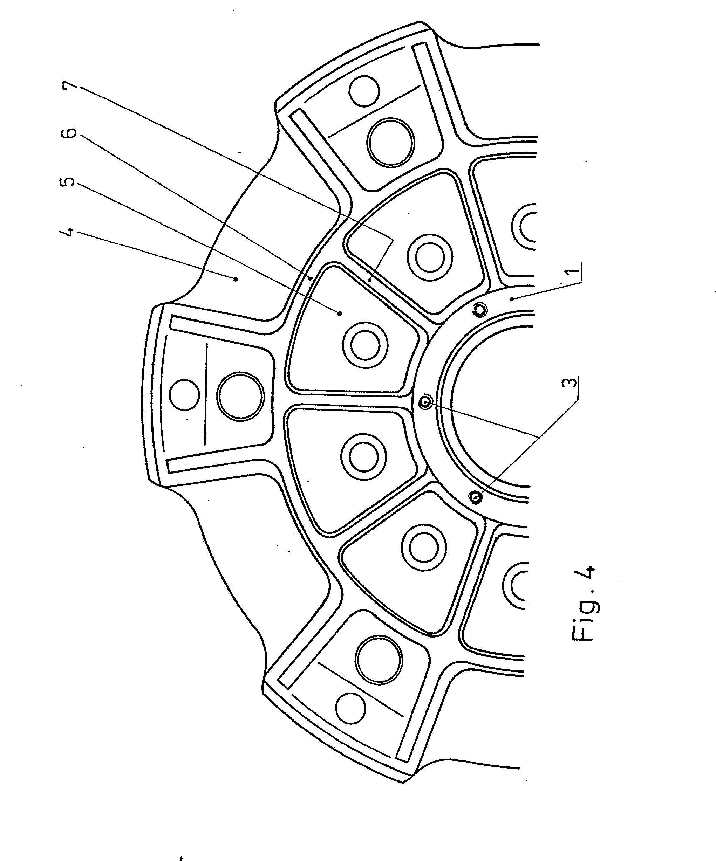

Beim Vorderrad nach den Fig. 3 und 4 dienen die Gewindebohrungen 3 im Nabenabschnitt 1 der Halterung einer nicht gezeigten Radkappe zum Abdecken der Rad-

6

lagerung. Der Scheibenabschnitt 5 des Radsternkörpers 4 ist axial nahe des fahrzeugaußenseitigen Endes am Nabenabschnitt 1 angesetzt und verläuft radial nach außen. Die Verstärkungsrippe 6 sowie die Radialrippen 7 weisen daher eine relativ kleine axiale Erstreckung auf. Im übrigen entspricht das Vorderrad dem Hinterrad nach Fig. 1 und 2, so daß sich eine detaillierte Beschreibung erübrigt. Auch die Bremsscheibe 17 entspricht derjenigen nach Fig. 1 und 2,und es sind somit die zu dieser geschilderten Vorteile erzielbar.

Die Ausbildung des Radkörpers erfolgt also zweckmäßig dergestalt, daß die Bremsscheiben17 sowie die Befestigungsschrauben 19 in Lochkreis, Anzahl und Teilung hierfür sowohl bei den gegossenen, erfindungsgemäßen Radkörpern als auch für die derzeit üblichen Scheibenradausführungen gleich sind. Hierdurch ist eine Austauschbarkeit gewährleistet, die Fertigung wird vereinheitlicht und die Ersatzteilhaltung vereinfacht.

0053725

Knorr-Bremse GmbH          München, 3.12.1980
Moosacher Str. 80          TP-fe
8000 München 40            - 1639 -



P a t e n t a n s p r ü c h e


1. Straßenfahrzeugrad mit abnehmbarer Felge, insbesondere für Nutzfahrzeuge, mit einem aus Gußmaterial bestehenden und radiale, von einem im wesentlichen zylindrischen Nabenabschnitt ausgehende Rippen aufweisenden Radsternkörper, der mit einem Bremskörper verschraubt ist, dadurch gekennzeichnet, daß der einen im wesentlichen radial verlaufenden, ringförmigen Scheibenabschnitt (5) aufweisende Radsternkörper (4) im mittleren Bereich seiner radialen Erstreckung einseitig eine axial vorspringende, umlaufende Verstärkungsrippe (6) aufweist, deren freies Ende sich annähernd in einer Radialebene mit dem Ende (2) des Nabenabschnittes (1) befindet, daß sich zwischen dem Nabenabschnitt (1) und der umlaufenden Verstärkungsrippe (6) achsparallel ausgerichtete, am Scheibenabschnitt (5) ansetzende Radialrippen (7) erstrecken, daß der Scheibenabschnitt (5) in seinen vom Nabenabschnitt (1), der umlaufenden Verstärkungsrippe (6) und den Radialrippen (7) umschlossenen Feldabschnitten (9) radial nahe dem Nabenabschnitt (1) von achsparallelen Bohrungen (10) für Befestigungsschrauben (19) einer an eine radiale und eine zylindrische Zentrierfläche (11 und 12) des Scheibenabschnittes (5) auf dessen der umlaufenden Ver-

- 2 -

stärkungsrippe (6) sowie den Radialrippen (7) abgewandten Seite anzusetzenden, einen im wesentlichen
zylindrischen Befestigungsabschnitt (16) und einen
von diesem radial nach außen ragenden Reibungsabschnitt (18) umfassenden Bremsscheibe (17) durchbrochen ist, und daß der Scheibenabschnitt (5)
radial außerhalb der umlaufenden Verstärkungsrippe
(6) übliche, gegebenenfalls durch Rippen (14) verstärkte Speichenköpfe (13) zur Halterung der Felge
(15) trägt.

2. Kraftfahrzeugrad nach Anspruch 1, dadurch gekennzeichnet, daß die Radialrippen (7) in gleichmäßiger
Winkelteilung angeordnet und in ihrem radial
mittleren Bereich axial zum Scheibenabschnitt (5)
hin eingezogen ausgeformt sind.

3. Kraftfahrzeugrad nach Anspruch 1 oder 2, dadurch
gekennzeichnet, daß die Rippen (14) an der umlaufenden Verstärkungsrippe (6) angesetzt sind.

Fig. 1

0053725

— 1639 —

Fig. 2

0053725

-1639-

Fig. 3

Fig. 4